# FASCICULE DE BREVET EUROPEEN

(11) **EP 3 210 660 B1**
(45) Date de publication et mention de la délivrance du brevet: **13.03.2019**
(21) Numéro de dépôt: 17150370.9
(22) Date de dépôt: 05.01.2017
(51) Int. Cl.: A63H 27/133, B64C 39/02, B64C 1/06, B64C 25/20

(54) **DRONE AVEC BRAS DE LIAISON PLIABLES**
DROHNE MIT ZUSAMMENKLAPPBAREN VERBINDUNGSARMEN
DRONE WITH FOLDABLE LINK ARMS

(30) Priorité: 25.02.2016 FR 1651563
(43) Date de publication de la demande: 30.08.2017
(73) Titulaire: Parrot Drones, 75010 Paris (FR)
(72) Inventeur: SANLAVILLE, Thierry, 75015 Paris (FR); DUCLOUX, Maxime, 91660 Mereville (FR); MORRA, Flavien, 93500 Pantin (FR)
(74) Mandataire: Dupuis-Latour, Dominique

(56) Documents cités:
- CN-A- 104 691 749
- FR-A1- 2 909 972
- KR-B1- 101 527 544
- US-A1- 2015 298 799
- US-A1- 2015 329 204

## Description

L'invention concerne les engins volants motorisés tels que les drones, notamment les drones à voilure tournante de type quadricoptère.

Un exemple typique d'un tel drone est *l'AR.Drone*, le *Bebop Drone* ou le *Bebop* 2 de Parrot SA, Paris, France, qui est un quadricoptère équipé d'une série de capteurs (accéléromètres, gyromètres trois axes, altimètre), et peut comprendre au moins une caméra vidéo frontale captant une image de la scène vers laquelle est dirigé le drone.

Ces drones sont pourvus de plusieurs rotors entrainés par des moteurs respectifs aptes à être commandés de manière différenciée afin de piloter le drone en attitude et en vitesse.

Ces quadricoptères sont équipés de quatre blocs propulseurs munis chacun d'une hélice. Les blocs propulseurs sont positionnés à l'extrémité distale des bras de liaison reliant les blocs propulseurs au corps du drone. En outre, ces drones comprennent une pluralité de pieds afin de supporter le drone notamment lorsqu'il est au sol.

Les WO 2010/061099 A2, EP 2 364 757 A1 et EP 2 450 862 A1 (Parrot) décrivent le principe de pilotage d'un drone par l'intermédiaire d'un téléphone ou tablette multimedia à écran tactile et accéléromètres intégrés, par exemple un *smartphone* de type *iPhone* ou une tablette de type *iPad* (marques déposées).

Les commandes émises par le dispositif de pilotage sont au nombre de quatre, à savoir la rotation en roulis, c'est-à-dire le mouvement en rotation autour de son axe longitudinal, le tangage c'est-à-dire le mouvement de rotation autour de l'axe transversal, le cap aussi appelé lacet, c'est-à-dire la direction vers laquelle le drone est orienté, et l'accélération verticale. Dans la suite de la description, on utilisera de façon générale le terme de "tablette" pour désigner cet appareil de pilotage, mais ce terme ne doit pas être entendu dans son acception étroite ; bien au contraire, elle englobe également les dispositifs fonctionnellement équivalents, notamment tous les dispositifs portables munis au moins d'un écran de visualisation et de moyens d'échange de données sans fil, tels que *smartphone*, baladeur multimédia non muni de fonctions de téléphonie, console de jeu, etc. La tablette incorpore les divers organes de contrôle nécessaires à la détection des commandes de pilotage et à l'échange bidirectionnel de données via une liaison radio de type réseau local sans fil Wi-Fi (IEEE 802.11) ou Bluetooth directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

Un tel drone, notamment un drone de type quadricoptère, de par sa structure, présente un encombrement important ce qui présente comme inconvénient qu'un tel drone est difficilement transportable.

Afin de simplifier le transport d'un tel drone, il est connu de désassembler les hélices du drone, toutefois, le drone comprenant une pluralité de bras de liaison reliés au corps du drone, reste toutefois encombrant et difficilement transportable. Il est également possible de prévoir des bras de liaison rabattables le long du corps du drone, comme cela est par exemple décrit par le CN 104 691 749 A ou le KR 10-1527544 B1.

Le but de l'invention est de remédier aux inconvénients des solutions connues, en proposant une structure particulière de drone présentant, en position repliée des bras, une configuration ramassée permettant un transport aisé du drone.

À cet effet, l'invention propose un drone à voilure tournante comprenant, comme divulgué par le CN 104 691 749 A précité, un corps de drone et deux bras de liaison avant et deux bras de liaison arrière s'étendant à partir du corps de drone et comprenant à leur extrémité distale un bloc propulseur, les positions avant et arrière des bras de liaison étant définies par rapport au sens principal de vol dudit drone, lesdits bras de liaison du drone étant aptes à se plier le long du corps dudit drone. Les points de fixation au corps du drone des deux bras de liaison avant et les points de fixation au corps du drone des deux bras de liaison arrière sont situés à des hauteurs respectives différentes par rapport au plan médian horizontal du corps du drone.

De façon caractéristique, les deux bras de liaison avant du drone forment un premier angle d'inclinaison par rapport au plan médian horizontal du corps du drone et les deux bras de liaison arrière forment un second angle d'inclinaison par rapport au plan médian horizontal du corps du drone, différent du premier angle.

Selon diverses caractéristiques subsidiaires :
- en position pliée, les bras de liaison sont repliés par paire, la paire étant formée d'un bras de liaison avant et d'un bras de liaison arrière, lesdits bras de liaison étant pliés l'un au-dessus de l'autre ;
- en position pliée, les bras de liaison d'une paire de bras s'étendent dans des directions respectives parallèles entre eux et les paires de bras s'étendent de part et d'autre du plan médian du corps de drone ;
- les bras de liaison sont reliés respectivement au corps de drone par un moyen de pivotement, le moyen de pivotement comprenant un moyen de verrouillage/déverrouillage du pliage ;
- ledit moyen de verrouillage/déverrouillage du pliage est en position verrouillée lorsque les bras sont dépliés et en position déverrouillée lorsque les bras de liaison sont en position dépliée et aptes à être repliés ;
- le moyen de verrouillage/déverrouillage du pliage est positionné sous le bras de liaison ;
- le moyen de verrouillage/déverrouillage du pliage est un bouton poussoir ;
- le bouton poussoir comprend un pion de blocage et un ressort ;
- le pion de blocage est conique ;
- les bras de liaison comprennent une goulotte de passage de câble dans laquelle est inséré un passe-câble, ledit passe-câble étant apte à protéger le câble lorsque les bras de liaison sont repliés.

On va maintenant décrire un exemple de mise en oeuvre de la présente invention, en référence aux dessins annexés.
La Figure 1 est une vue d'ensemble montrant le drone et le dispositif de pilotage associé permettant son pilotage.
La Figure 2 est une vue du drone conformément à l'invention.
Les Figures 3A et 3B sont des vues du drone ayant les bras de liaison repliés conformément à l'invention.
La Figure 3C montre un mode de réalisation particulier des bras de liaison repliés conformément à l'invention.
La Figure 4 représente les moyens du drone permettant de replier les bras du drone conformément à l'invention.
Les Figures 5A et 5B représentent un exemple de mise en oeuvre du moyen de verrouillage/déverrouillage du pliage des bras de liaison du drone conformément à l'invention.
La Figure 6 représente illustre le procédé de pliage des bras de liaison du drone conformément à l'invention.
La Figure 7 représente le passage de câble d'alimentation du bloc propulseur.
La Figure 8 représente le système de relevage d'un support de drone conformément à l'invention.
La Figure 9 est une vue détaillée du système de relevage d'un support de drone conformément à l'invention.
La Figure 10 représente les moyens de verrouillage du support de drone conformément à l'invention.
La Figure 11 montre le drone ayant les supports de drone relevés.

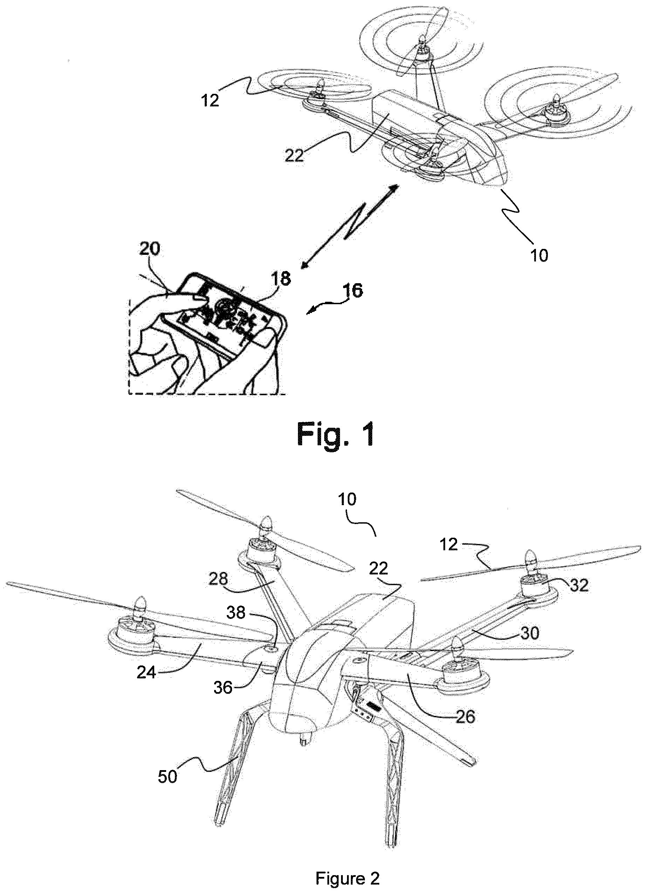

Nous allons maintenant décrire un exemple de réalisation de l'invention. Sur la Figure 1, la référence 10 désigne de façon générale un drone. Selon l'exemple illustré en Figure 1, il s'agit d'un drone de type quadricoptère.

Le drone quadricoptère comporte un corps de drone 22 et deux bras de liaison avant et deux bras de liaison arrière s'étendant à partir du corps de drone et comprenant à leur extrémité distale un bloc propulseur, les positions avant et arrière des bras de liaison étant définies par rapport au sens principal de vol dudit drone. Le bloc-propulseur comprend un moteur et une hélice 12 assemblée sur ledit moteur.

Les blocs propulseurs sont pilotés indépendamment par un système intégré de navigation et de contrôle d'attitude.

Le drone 10 comporte également une caméra à visée frontale (non représentée) permettant d'obtenir une image de la scène vers laquelle est dirigé le drone. Le drone comporte également une caméra à visée verticale (non représentée) pointant vers le bas, apte à capter des images successives du terrain survolé et utilisée notamment pour évaluer la vitesse du drone par rapport au sol.

Selon un exemple de réalisation, le drone est muni de capteurs inertiels (accéléromètres et gyromètres) permettant de mesurer avec une certaine précision les vitesses angulaires et les angles d'attitude du drone, c'est-à-dire les angles d'Euler (tangage *ϕ*, roulis *θ* et cap *ψ*) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone fournit par ailleurs une mesure de l'altitude par rapport au sol.

Le drone 10 est piloté par un dispositif de pilotage 16 distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage 16.

Le dispositif de pilotage distant 16 est un appareil pourvu d'un écran tactile 18 affichant l'image captée par la caméra embarquée 14 du drone 10, avec en superposition un certain nombre de symboles permettant l'activation de commandes par simple contact du doigt 20 d'un utilisateur sur l'écran tactile 18.

Le dispositif de pilotage 16 communique avec le drone 10 via un échange bidirectionnel de données par liaison sans fil de type réseau local Wi-Fi (IEEE 802.11) ou Bluetooth : du drone 10 vers le dispositif de pilotage 16 notamment pour la transmission de l'image captée par la caméra, et du dispositif de pilotage 16 vers le drone 10 pour l'envoi de commandes de pilotage.

En Figure 2 est illustré en détail le drone quadricoptère de la Figure 1. Le drone quadricoptère 10 comporte un corps de drone 22 et deux bras de liaison avant 24, 26 et deux bras de liaison arrière 28, 30 s'étendant à partir du corps de drone 22 et comprenant à leur extrémité distale un bloc propulseur 32 sur lequel est assemblée une hélice 12, les positions avant et arrière des bras de liaison étant définies par rapport au sens principal de vol dudit drone.

Le drone quadricoptère 10 présente une structure de châssis particulière, notamment l'utilisation d'une forme appelée "VTail" à l'arrière du drone par rapport au déplacement principal de vol du drone. En d'autres termes, le châssis est modifié de telle sorte que les deux bras de liaison arrière 28, 30 forment un V entre eux.

Ainsi, les points de fixation au corps du drone des deux bras de liaison avant 24, 26 et les points de fixation au corps du drone des deux bras de liaison arrière 28, 30 sont situés à des hauteurs respectives différentes par rapport au plan médian horizontal du corps du drone 22.

En outre, les deux bras de liaison avant 24, 26 du drone forment un premier angle d'inclinaison par rapport au plan médian horizontal du corps du drone et les deux bras de liaison arrière 28, 30 forment un second angle d'inclinaison par rapport au plan médian horizontal du corps du drone différent du premier angle.

Selon un exemple de mode de réalisation, deux bras de liaison avant 24, 26 du drone forment un angle de 0 à 10° par rapport au plan médian horizontal du corps du drone et les deux bras de liaison arrière 28, 30 forment un angle compris entre 15° et 45°. Selon un mode de réalisation particulier, l'angle relatif aux deux bras de liaison arrière est environ 30°.

Les hélices 12 assemblées sur les blocs propulseurs 32 respectivement du bras avant 26 et du bras arrière 30 sont positionnées dans un même plan, notamment un même plan de rotation. Et les hélices 12 assemblées sur les blocs propulseurs 32 respectivement du bras avant 24 et du bras arrière 28 sont positionnées dans un même plan, notamment un même plan de rotation. En d'autres termes, les hélices assemblées sur les blocs propulseurs 32 d'un même côté du drone sont positionnées dans un même plan, notamment un même plan de rotation. Le côté du drone est défini au regard du sens principal de vol du drone.

Selon une alternative de réalisation, l'ensemble des hélices assemblées sur les blocs propulseurs du drone sont positionnées dans un même plan, notamment un même plan de rotation.

Les hélices 12 sont aptes à être désassemblées du bloc propulseur 32, soit pour être rangées soit pour être changées dans le cas où les hélices sont endommagées.

Selon un mode de réalisation particulier, les hélices assemblées sur les blocs propulseurs 32 des bras de liaison 24, 26 avant du drone mesurent 279 millimètres de diamètre alors que les hélices 12 assemblées sur les blocs propulseurs des bras de liaison arrière 28, 30 du drone mesurent 229 millimètres de diamètre.

Selon un mode de réalisation particulier, le drone 10 est apte à transporter différents capteurs embarqués. Les capteurs sont en particulier fixés sur le corps du drone, notamment sur la structure inférieure du drone. Selon un autre mode de réalisation, les capteurs sont insérés dans un support, lui-même accroché sur la structure externe inférieure du drone.

Les capteurs embarqués sur le drone sont par exemple une caméra, une caméra 360° ou une caméra stéréoscopique.

Le drone comprend également au moins un support de drone 50. Comme illustré en Figure 2, le drone comprend deux supports de drone 50 chacun muni de deux pieds.

Le drone, de par sa structure, présente un encombrement important ce qui présente comme inconvénient qu'un tel drone est difficilement transportable.

Afin de répondre à cet impératif, et conformément à l'invention, les bras de liaison 24, 26, 28, 30 du drone sont aptes à se plier le long du corps dudit drone 22 afin de réduire l'encombrement du drone lors de son transport.

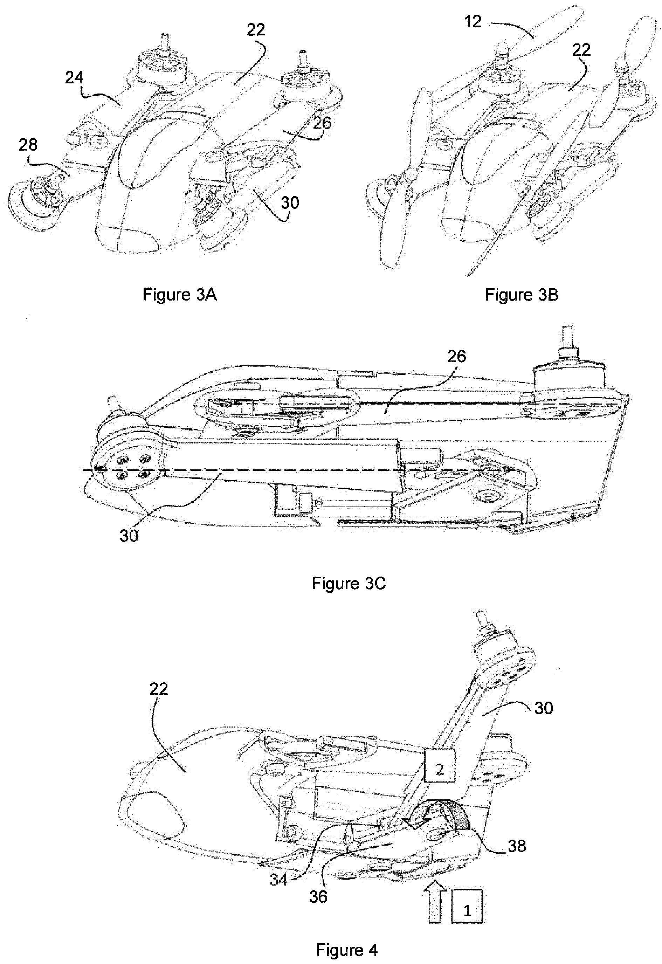

La Figure 3A illustre le drone dans une configuration transportable aisément dans laquelle les hélices ont été désassemblées et les bras de liaison ont été repliés le long du corps de drone.

Toutefois, dans une alternative de réalisation les bras de liaison du drone peuvent être repliés tout en conservant les hélices assemblées sur les blocs propulseurs du drone tel qu'illustré en Figure 3B.

Comme illustré en Figure 3A, en position pliée, les bras de liaison sont repliés par paire (24, 28) et (26, 30), la paire étant formée d'un bras de liaison avant et d'un bras de liaison arrière, lesdits bras de liaison étant pliés l'un au-dessus de l'autre.

En particulier, lorsque les bras de liaison sont repliés, les bras de liaison d'une paire de bras s'étendent dans des plans respectifs parallèles entre eux et les paires de bras s'étendent de part et d'autre du plan médian horizontal du corps de drone tel que montré en Figure 3C.

Pour ce faire, les bras de liaison sont reliés respectivement au corps de drone par un moyen de pivotement 34, le moyen de pivotement 34 comprenant un moyen de verrouillage/déverrouillage du pliage 38 tel que montré en Figure 4.

Selon un exemple de réalisation, le moyen de pivotement 34 est positionné sensiblement en extérieur du profil principal du corps de drone 22. Pour ce faire, le corps de drone comprend au niveau de chacun des bras de liaison une excroissance 36 sur laquelle est positionné le moyen de pivotement 34.

Comme illustré en Figure 4, les moyens de verrouillage/déverrouillage du pliage 38 sont positionnés sous les bras de liaison.

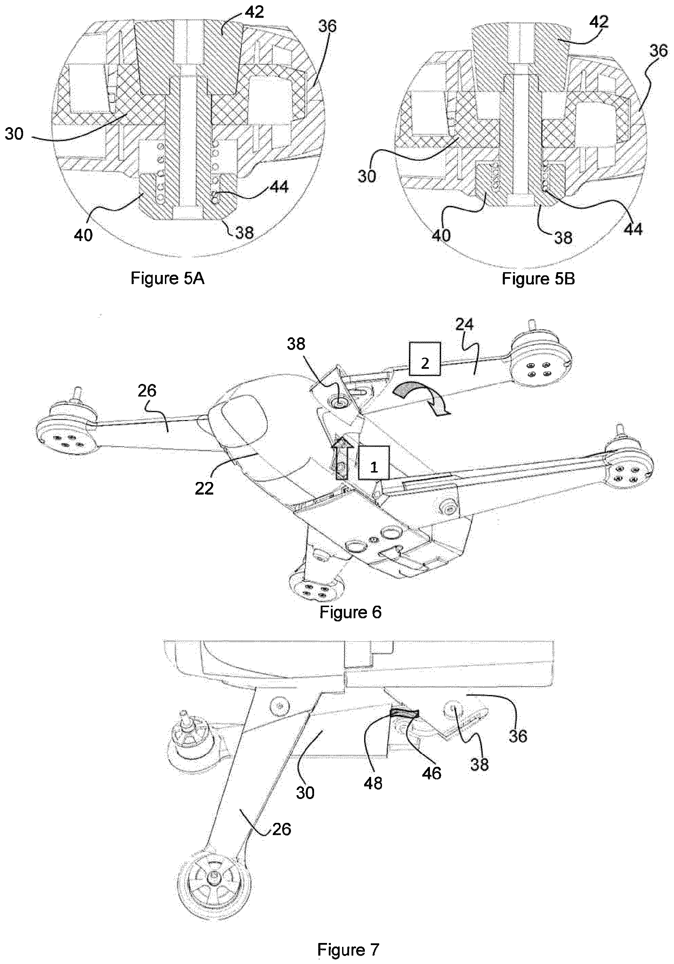

Selon un mode de réalisation particulier, ledit moyen de verrouillage du pliage 38 illustré en Figures 5A et 5B comprennent au moins deux positions, à savoir, une position verrouillée lorsque les bras sont dépliés et une position déverrouillée lorsque les bras de liaison sont en position dépliée et aptes à être repliés ou repliés.

La position verrouillée du moyen de verrouillage/déverrouillage du pliage 38 permet de maintenir les bras de liaison en position dépliée. En d'autres termes, la position verrouillée permet de maintenir les bras de liaison dans leur position normale pour permettre le vol du drone. En outre, le moyen de verrouillage permet d'éviter tout incident de repliement non désiré, notamment en cours de vol.

Les Figures 5A et 5B illustrent un exemple de mise en oeuvre du moyen de verrouillage/déverrouillage du pliage conformément à l'invention, respectivement dans la positionnée verrouillée et dans la positionnée déverrouillée.

Selon un exemple de réalisation illustré aux Figures 5A et 5B, le moyen de verrouillage/déverrouillage du pliage 38 est un bouton-poussoir 40 qui comprend selon un mode de réalisation un pion de blocage 42 et un ressort 44. Le pion de blocage 42 peut être de forme conique.

La Figure 5A illustre le moyen de verrouillage/déverrouillage du pliage 38 en position verrouillée alors que la Figure 5B illustre le moyen de verrouillage/déverrouillage du pliage 38 en position déverrouillée.

Sur ces figures sont représentés l'excroissance 36 du corps de drone 22 sur lequel le bras de liaison est fixé, le bras de liaison 30 et le moyen de verrouillage/déverrouillage 38.

Dans la position verrouillée, le pion de blocage 42 conique tel qu'illustré est simultanément en contact avec le corps de drone 22 et le bras de liaison 30 afin de bloquer tout mouvement de l'un par rapport à l'autre.

Dans la position déverrouillée, le pion de blocage 42 conique est extrait de son emplacement dans le bras de liaison 30 de sorte à permettre un mouvement de rotation du bras de liaison.

Le passage de la position verrouillée à la position déverrouillée est réalisé par le bouton-poussoir 40.

Le moyen de verrouillage/déverrouillage du pliage 38 comprend également un ressort 44 de sorte à permettre un verrouillage automatique du moyen de verrouillage/déverrouillage du pliage lorsque l'excroissance du corps de drone 36 et le bras de liaison 30 sont en position prêt pour le vol.

Selon le mode de réalisation du pliage maintenant décrit, le pliage des bras de liaison débute par le pliage des bras avant.

Pour ce faire, comme représenté en Figure 6, le moyen de verrouillage/déverrouillage du pliage 38, par exemple le bouton poussoir est actionné sous le bras de liaison de chacun des bras de liaison avant 24, 26. Puis les bras de liaison avant du drone sont repliés le long du corps du drone 22. Ainsi, les bras de liaison sont repliés vers l'arrière du drone. Ensuite, tel que représenté en Figure 4 précédemment décrite, le moyen de verrouillage/déverrouillage du pliage 38, par exemple le bouton-poussoir 40 est actionné sous le bras de liaison de chacun des bras de liaison arrière 28, 30. Puis les bras de liaison arrière du drone sont repliés le long du corps du drone 22. Ainsi, les bras de liaison arrière sont repliés vers l'avant du drone.

La Figure 3C illustre un mode de réalisation de l'invention dans lequel les paires de bras de liaison sont repliées, les bras de liaison de ladite paire étant sensiblement alignés parallèlement l'un par rapport à l'autre.

Le bloc propulseur 32 est relié au corps de drone 22 via un câble de commande et d'alimentation afin d'être piloté par l'électronique contenue dans le corps de drone.

Comme illustré en Figure 7, le câble de commande 46 est placé dans une goulotte de passage de câble afin d'être protégé, la goulotte étant présente dans le bras de liaison et dans le corps de drone. Lorsque les bras de liaison du drone sont repliés, il est observé que le câble de commande n'est plus protégé au niveau du moyen de pivotement.

Ainsi, afin de maintenir ce câble de commande protégé, le câble est inséré dans un passe-câble 48 de sorte à ne pas permettre un accès direct à ce câble lorsque le bras de liaison est dans une position repliée. Comme indiqué précédemment, le drone quadricoptère est notamment apte à embarqué sur sa structure des capteurs, notamment une caméra, une caméra 360° ou une caméra stéréoscopique. De préférence, le capteur est fixé au corps de drone 22 sur la structure inférieure du corps de drone ou dans un support lui-même fixé sur la partie inférieure du corps de drone.

Une telle configuration de drone présente l'inconvénient suivant. Le capteur vidéo couvre dans son champ de vision, au moins une partie des supports du drone voire l'ensemble des supports du drone lors de l'utilisation d'un capteur vidéo 360° agencé sous le corps de drone. Ainsi, il est observé que les supports du drone rentrant dans le champ de vision du capteur viennent perturber la qualité de l'image vidéo et altèrent l'aspect visuel de la séquence vidéo.

Un drone, comme illustré en Figure 2, comprend au moins deux supports de drone 50 s'étendant à partir du corps de drone.

Chaque support de drone comprend au moins un pied. Le drone illustré en Figure 2 comprend deux supports de drone, ayant chacun deux pieds. Conformément à l'invention, les supports 50 du drone comprennent respectivement un moyen de relevage 52 et le corps de drone 22 comprend au moins un dispositif de commande de relevage 54 en liaison avec chacun des moyens de relevage 52 des supports de drone 50 de sorte que les supports de drone soient aptes à être relevés lorsque le drone est en vol.

Ainsi, une telle configuration du support de drone permet d'une part, un atterrissage du drone et une position stable du drone au sol lorsque les supports de drone 50 ne sont pas relevés, et d'autre part, d'avoir un champ visuel dégagé sous le drone lorsque les supports de drone 50 sont relevés.

En effet, la position relevée des supports de drone permet de supprimer les supports du drone du champ visuel du capteur vidéo et donc permet d'avoir une image vidéo de très grande qualité visuelle et non perturbée notamment par les pieds des supports de drone.

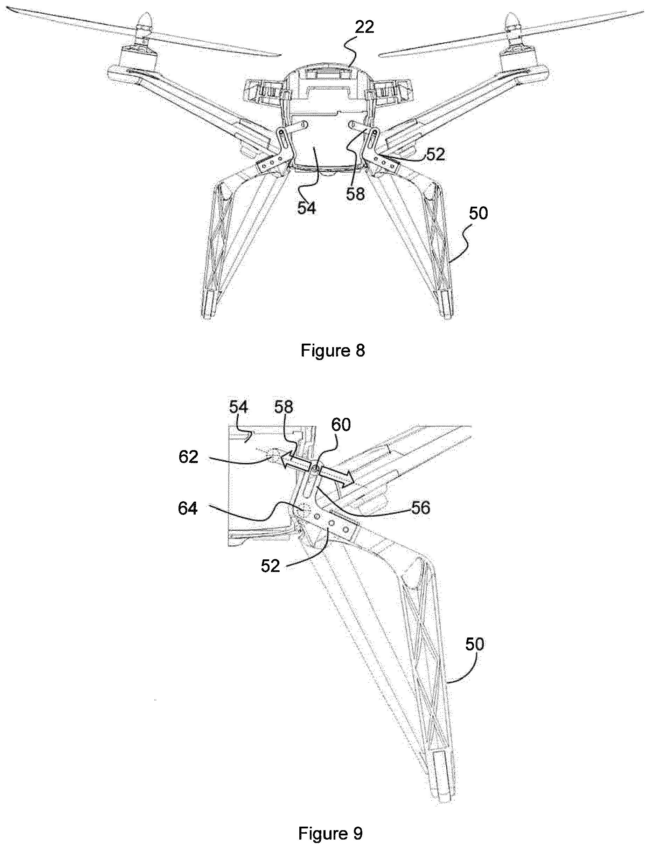

La Figure 8 illustre un tel drone selon une coupe verticale réalisée au niveau du dispositif de commande de relevage 54 et des moyens de relevage 52 des supports de drone.

Ainsi, il est illustré un corps de drone 22 comprenant un dispositif de commande de relevage 54. Ce dispositif de commande est par exemple une boite à engrenages.

Le drone comprend des supports de drone 50 comprenant au niveau de leur fixation au corps du drone 22, un moyen de relevage 52 coopérant avec le dispositif de commande de relevage 54.

Selon un mode de réalisation particulier et tel qu'illustré en Figure 9, le moyen de relevage 52 d'un support de drone comprend une bielle de relevage 56.

En outre, le dispositif de commande de relevage 54 comprend des manivelles de relevage 58 pivotantes, reliées par un moyen de couplage 60 respectivement à la bielle de relevage 56 du moyen de relevage 52 du support de drone de sorte à permettre le relevage des supports de drone. Selon ce mode de réalisation, en position non relevée du support de drone, la position des manivelles 58 et des moyens de relevage 52 sont dans une position qui annule les forces résultantes dans le dispositif de commande de relevage 54 provenant du poids du drone ainsi que du choc du drone lors de l'impact au sol lors de l'atterrissage.

Comme illustré aux Figures 8 et 9, la manivelle de relevage 58 est entrainée en rotation par le dispositif de commande de relevage 54. Pour ce faire, une extrémité de la manivelle de relevage 58 est fixée à un axe de rotation 62 du dispositif de commande de relevage 54, cet axe de rotation étant mis en rotation par le dispositif de commande de relevage.

La seconde extrémité de la manivelle de relevage 58 comprend le moyen de couplage 60 apte à coopérer avec la bielle de relevage 56 du moyen de relevage 52.

Ainsi, selon ce mode de réalisation, le système bielle-manivelle est mis en oeuvre.

Le moyen de couplage 60 est par exemple un axe fermement solidarisé à la manivelle 58 venant s'insérer dans l'ouverture de la bielle de relevage 56.

Selon un autre exemple de réalisation du dispositif de commande de relevage 54, celui-ci est réalisé par un motoréducteur d'entrainement dudit axe de rotation de la manivelle de relevage. Un tel motoréducteur est un ensemble constitué d'un réducteur et d'un moteur électrique. Le réducteur permet de réduire la vitesse de rotation du moteur électrique.

Comme illustré en Figure 9, le moyen de relevage 52 comprend dans sa partie centrale une articulation pivotante du support 64.

Cette articulation pivotante du support 64 est par exemple composée d'un axe de pivot qui vient s'insérer dans le corps du drone afin de permettre une rotation du moyen de relevage selon cet axe.

De façon alternative, l'articulation pivotante du support 64 est par exemple un trou traversant de type perforation, notamment de forme ronde, dans lequel vient s'insérer un axe de rotation de forme complémentaire solidarisé au corps de drone.

Le moyen de relevage 52 comprend par exemple deux branches s'étendant de la partie centrale du moyen de relevage, notamment de l'articulation pivotante 64 et formant un angle entre ces branches.

L'angle formé entre les deux branches est compris entre 75 et 105° et préférentiellement de 90°.

Selon le mode de réalisation illustré en Figure 9, l'une des branches comprend la bielle de relevage 56 reliée à une manivelle de relevage 58 du dispositif de commande de relevage et la deuxième branche est solidaire du support de drone.

Selon ce mode de réalisation, la direction de la force exercée sur la manivelle de relevage est centrée sensiblement sur l'axe de pivot de la manivelle de relevage et n'exerce aucun couple sur cette dernière. Les efforts à l'intérieur du dispositif de commande de relevage sont inexistants ou très faibles.

Conformément à l'invention, le dispositif de commande de relevage 54 permet après le décollage du drone, le relevage des supports du drone de manière à libérer le champ de vision du capteur vidéo fixé par exemple sur la surface inférieure du corps de drone.

Pour ce faire, le dispositif de commande de relevage 54 est piloté par le dispositif de pilotage 16 illustré en Figure 1. En particulier, le dispositif de pilotage 16 comprend une commande de relevage et d'abaissement des supports du drone. Cette commande est émise du dispositif de pilotage au drone via la liaison de communication établie entre le dispositif de pilotage et le drone.

Selon un mode de réalisation, l'utilisateur par une action sur le dispositif de pilotage actionne la commande de relevage et d'abaissement des supports du drone.

Selon un mode de réalisation alternatif, après l'activation d'une commande par l'utilisateur de décollage du drone, le dispositif de pilotage émet, après décollage, une commande de relevage des supports de drone.

De même, lorsque le drone est en vol, l'utilisateur peut actionner sur le dispositif de pilotage une commande d'abaissement des supports du drone notamment en vue d'atterrir.

Selon un mode de réalisation alternatif, après l'activation d'une commande par l'utilisateur d'atterrissage du drone, le dispositif de pilotage émet, avant de procéder à l'atterrissage, une commande d'abaissement des supports du drone.

Sur réception de la commande de relevage/d'abaissement des supports de drone, le drone contrôle l'état du drone et exécute la commande si l'état du drone le permet. Par exemple, la commande de relevage des supports de drone ne sera pas exécutée lorsque le drone est au sol.

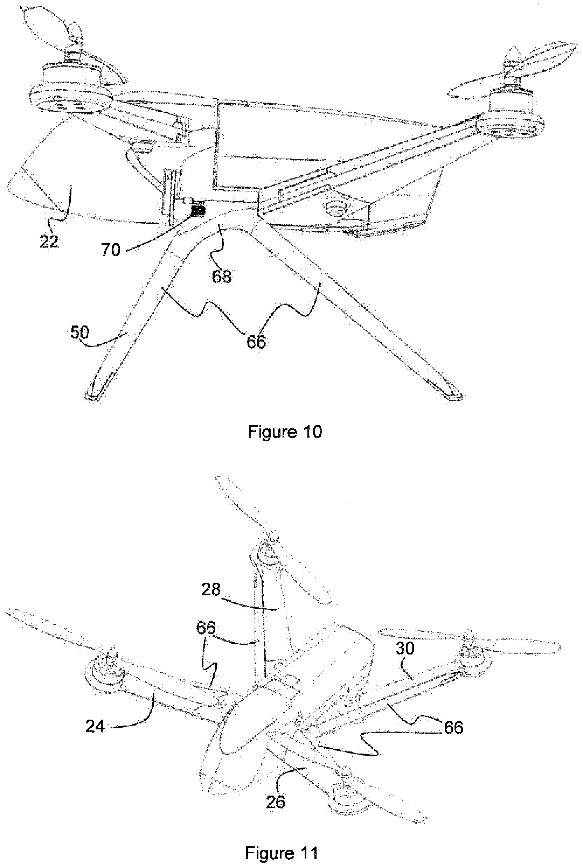

Si l'état du drone permet l'exécution de ladite commande, alors cette commande pilotée par le dispositif de contrôle du drone va être exécutée en actionnant le dispositif de commande de relevage 54 du corps de drone. La Figure 10 correspond au drone de la Figure 2 selon une vue de côté du drone. Ce drone comprend deux supports de drone 50, et chaque support de drone comprend respectivement deux pieds 66 reliés entre eux par une section centrale 68.

Selon un mode de réalisation particulier illustré en Figure 10, ladite section centrale 68 du support de drone est apte à pivoter pour permettre le relevage des pieds.

La Figure 11 illustre un mode de réalisation dans lequel les supports de drone viennent en alignement avec les bras de liaison. En particulier, les supports de drone forment respectivement le bord d'attaque des bras de liaison positionnés à l'arrière du drone et/ou le bord de fuite des bras de liaison positionnés à l'avant du drone, les positions avant et arrière des bras de liaison étant définies par rapport au sens principal de vol dudit drone.

De la sorte, la trainée, définie comme la force qui s'oppose au mouvement des supports du drone dans l'air, est supprimée en cours de vol du drone. Pour ce faire, les supports de drone en position relevée s'intègrent dans la forme des bras du drone pour reconstituer une forme de type "aile avion" c'est-à-dire ayant une voilure portante, avec un bord d'attaque et un bord de fuite permettant de réduire la trainée des supports lors du vol du drone.

En outre, il est observé que selon le mode de réalisation illustré en Figure 11, les supports de drone dans la position relevée assurent un système de blocage supplémentaire en vol notamment dans le cas de bras de liaison pliables.

De plus, les supports de drone dans la position relevée viennent renforcer structurellement les bras de liaison lors du vol du drone.

Selon un mode de réalisation particulier, les supports de drone sont aptes à être désolidarisés du corps de drone, notamment afin de réduire l'encombrement du drone, en particulier pour son transport.

Pour ce faire et comme illustré en Figure 10, les supports de drone comprennent respectivement un moyen de verrouillage/déverrouillage des supports de drone 70 sur le corps de drone.

Le moyen de verrouillage/déverrouillage des supports de drone est apte à maintenir fermement le support de drone au corps de drone dans la position verrouillée. En outre dans la position déverrouillée, le support de drone est apte à être retiré du corps de drone, notamment le moyen de relevage 52 du support de drone peut être désassemblé du dispositif de commande de relevage.

Il est maintenant décrit le procédé de désolidarisation du support de drone, du corps de drone. Ce procédé est basé sur deux étapes à réaliser sur chaque support et présente l'avantage de ne pas nécessiter d'outillage.

Une première étape consiste à actionner le moyen de verrouillage/déverrouillage des supports de drone 70 afin de déverrouiller ledit moyen et donc permettre une désolidarisation du support. Une seconde étape consiste à déplacer le support de drone 50 vers l'avant du drone, l'avant du drone étant défini par le sens principal de vol du drone. Ce déplacement permet par exemple de désolidariser le moyen de relevage 52 de la manivelle de relevage 58 et donc du dispositif de commande de relevage 54. En outre ce déplacement permet de désolidariser le moyen de relevage 52 de l'articulation pivotante du corps de drone 64. Une fois la désolidarisation du moyen de relevage avec la manivelle de relevage et l'articulation pivotante, le support de drone est apte à être retiré du drone. L'ensemble du système de relevage des supports de drone a été illustré sur un drone présentant une structure particulière notamment en ce que les points de fixation au corps du drone des deux bras de liaison avant 24, 26 et les points de fixation au corps du drone des deux bras de liaison arrière 28, 30 sont situés à des hauteurs respectives différentes par rapport au plan médian horizontal du corps du drone, et les deux bras de liaison avant du drone 24, 26 forment un premier angle d'inclinaison par rapport au plan médian horizontal du corps du drone et les deux bras de liaison arrière 28, 30 forment un second angle d'inclinaison par rapport au plan médian horizontal du corps du drone différent du premier angle.

Toutefois, cet ensemble du système de relevage des supports de drone est également apte à être mis en oeuvre sur un drone comprenant des points de fixation au corps du drone des deux bras de liaison avant et les points de fixation au corps du drone des deux bras de liaison arrière situés à une même hauteur par rapport au plan médian horizontal du corps du drone, et les deux bras de liaison avant du drone forment un même angle d'inclinaison par rapport au plan médian horizontal du corps du drone que les deux bras de liaison arrière par rapport au plan médian horizontal du corps du drone.

## Revendications

1. Drone à voilure tournante (10), comprenant :
- un corps de drone (22) ; et
- deux bras de liaison avant (24, 26) et deux bras de liaison arrière (28, 30) s'étendant à partir du corps de drone et comprenant à leur extrémité distale un bloc propulseur (32), les positions avant et arrière des bras de liaison étant définies par rapport au sens principal de vol dudit drone, lesdits bras de liaison du drone étant aptes à se plier le long du corps dudit drone,
les points de fixation au corps du drone des deux bras de liaison avant et les points de fixation au corps du drone des deux bras de liaison arrière étant situés à des hauteurs respectives différentes par rapport au plan médian horizontal du corps du drone,
**caractérisé en ce que** les deux bras de liaison avant du drone forment un premier angle d'inclinaison par rapport au plan médian horizontal du corps du drone et les deux bras de liaison arrière forment un second angle d'inclinaison par rapport au plan médian horizontal du corps du drone, différent du premier angle.

2. Drone à voilure tournante selon la revendication 1, **caractérisé en ce que**, en position pliée, les bras de liaison sont repliés par paire, la paire étant formée d'un bras de liaison avant et d'un bras de liaison arrière, lesdits bras de liaison étant pliés l'un au-dessus de l'autre.

3. Drone à voilure tournante selon la revendication 2, **caractérisé en ce que**, en position pliée, les bras de liaison d'une paire de bras s'étendent dans des directions respectives parallèles entre eux et les paires de bras s'étendent de part et d'autre du plan médian du corps de drone.

4. Drone à voilure tournante selon la revendication 1, **caractérisé en ce que** les bras de liaison sont reliés respectivement au corps de drone par un moyen de pivotement (34), le moyen de pivotement comprenant un moyen de verrouillage/déverrouillage du pliage (38).

5. Drone à voilure tournante selon la revendication 4, **caractérisé en ce que** ledit moyen de verrouillage/déverrouillage du pliage est en position verrouillée lorsque les bras sont dépliés et en position déverrouillée lorsque les bras de liaison sont en position dépliée et aptes à être repliés.

6. Drone à voilure tournante selon la revendication 4, **caractérisé en ce que** le moyen de verrouillage/déverrouillage du pliage est positionné sous le bras de liaison.

7. Drone à voilure tournante selon la revendication 4, **caractérisé en ce que** le moyen de verrouillage/déverrouillage du pliage est un bouton poussoir.

8. Drone à voilure tournante selon la revendication 7, **caractérisé en ce que** le bouton poussoir comprend un pion de blocage et un ressort.

9. Drone à voilure tournante selon la revendication 8, **caractérisé en ce que** le pion de blocage est conique.

10. Drone à voilure tournante selon la revendication 1, **caractérisé en ce que** les bras de liaison comprennent une goulotte de passage de câble dans laquelle est inséré un passe-câble, ledit passe-câble étant apte à protéger le câble lorsque les bras de liaison sont repliés.

## Patentansprüche

1. Rotorblattdrohne (10), umfassend:
- einen Drohnenkörper (22); und
- zwei vordere Verbindungsarme (24, 26) und zwei hintere Verbindungsarme (28, 30), die sich von dem Drohnenkörper erstrecken und an ihrem distalen Ende ein Triebwerk (32) umfassen, wobei die vordere und die hintere Position der Verbindungsarme relativ zu der Hauptflugrichtung der Drohne definiert sind, wobei die Verbindungsarme der Drohne entlang des Körpers der Drohne klappbar sind,
wobei die Punkte der Befestigung der zwei vorderen Verbindungsarme an dem Körper der Drohne und die Punkte der Befestigung der zwei hinteren Verbindungsarme sich in jeweiligen, bezüglich der horizontalen Mittelebene des Körpers der Drohne (22) verschiedenen Höhen befinden,
**dadurch gekennzeichnet, dass** die zwei vorderen Verbindungsarme der Drohne einen ersten Neigungswinkel bezüglich der horizontalen Mittelebene des Körpers der Drohne bilden und dass die zwei hinteren Verbindungsarme der Drohne einen zweiten Neigungswinkel bezüglich der horizontalen Mittelebene des Körpers der Drohne bilden, der von dem ersten Winkel verschieden ist.

2. Rotorblattdrohne, nach Anspruch 1, **dadurch gekennzeichnet, dass** die Verbindungsarme in der geklappten Position paarweise eingeklappt sind, wobei das Paar von einem vorderen Verbindungsarm und einem hinteren Verbindungsarm gebildet ist, wobei die Verbindungsarme aufeinander geklappt sind.

3. Rotorblattdrohne nach Anspruch 2, **dadurch gekennzeichnet, dass** sich die Verbindungsarme eines Armpaares in der geklappten Position in jeweiligen zueinander parallelen Richtungen erstrecken und sich die Armpaare auf beiden Seiten der Mittelebene des Drohnenkörpers erstrecken.

4. Rotorblattdrohne nach Anspruch 1, **dadurch gekennzeichnet, dass** die Verbindungsarme mit dem Drohnenkörper jeweils mittels eines Schwenkmittels (34) verbunden sind, wobei das Schwenkmittel ein Mittel zum Verriegeln/Entriegeln der Klappung (38) umfasst.

5. Rotorblattdrohne nach Anspruch 4, **dadurch gekennzeichnet, dass** das Mittel zum Verriegeln/Entriegeln der Klappung in der verriegelten Position ist, wenn die Arme ausgeklappt sind, und in der entriegelten Position ist, wenn die Verbindungsarme in der ausgeklappten Position sind und einklappbar sind.

6. Rotorblattdrohne nach Anspruch 4, **dadurch gekennzeichnet, dass** das Mittel zum Verriegeln/Entriegeln der Klappung unter dem Verbindungsarm positioniert ist.

7. Rotorblattdrohne nach Anspruch 4, **dadurch gekennzeichnet, dass** das Mittel zum Verriegeln/Entriegeln der Klappung ein Drucktaster ist.

8. Rotorblattdrohne nach Anspruch 7, **dadurch gekennzeichnet, dass** der Drucktaster einen Sperrstift und eine Feder umfasst.

9. Rotorblattdrohne nach Anspruch 8, **dadurch gekennzeichnet, dass** der Sperrstift konisch ist.

10. Rotorblattdrohne nach Anspruch 1, **dadurch gekennzeichnet, dass** die Verbindungsarme einen Kabeldurchtrittsschacht umfassen, in den eine Kabeltülle eingeführt ist, wobei die Kabeltülle in der Lage ist, das Kabel zu schützen, wenn die Verbindungsarme eingeklappt sind.

## Claims

1. A rotary-wing drone (10) comprising:
- a drone body (22); and
- two front linking arms (24, 26) and two rear linking arms (28, 30) extending from the drone body and comprising at their distal end a propulsion unit (32), the front and rear positions of the linking arms being defined with respect to the main direction of flight of said drone, said drone linking arms being adapted to be folded over along the body of said drone,
the points of fixation of the two front linking arms to the drone body and the points of fixation of the two rear linking arms to the drone body being located at different respective heights with respect to the horizontal median plane of the drone body,
**characterized in that** the two front linking arms of the drone form a first angle of inclination with respect to the horizontal median plane of the drone body and the two rear linking arms form a second angle of inclination with respect to the horizontal median plane of the drone body, different from the first angle.

2. The rotary-wing drone according to claim 1, **characterized in that**, in the folded position, the linking arms are folded by pair, the pair being formed of a front linking arm and a rear linking arm, said linking arms being folding one over the other.

3. The rotary-wing drone according to claim 2, **characterized in that**, in the folded position, the linking arms of a pair of arms extend in respective planes parallel to each other and the pairs of arms extend on either side of the horizontal median plane of the drone body.

4. The rotary-wing drone according to claim 1, **characterized in that** the linking arms are respectively connected to the drone body by a pivoting means (34), the pivoting means comprising a means for locking/unlocking the folding (38).

5. The rotary-wing drone according to claim 4, **characterized in that** said folding locking/unlocking means is in the locked position when the arms are unfolded and in the unlocked position when the linking arms are in the unfolded position and adapted to be folded over.

6. The rotary-wing drone according to claim 4, **characterized in that** the folding locking /unlocking means is positioned under the linking arm.

7. The rotary-wing drone according to claim 4, **characterized in that** the folding locking/unlocking means is a push button.

8. The rotary-wing drone according to claim 7, **characterized in that** the push button comprises a locking pin and a spring.

9. The rotary-wing drone according to claim 8, **characterized in that** the locking pin is conical.

10. The rotary-wing drone according to claim 1, **characterized in that** the linking arms comprise a cable trough into which is inserted a grommet, said grommet being adapted to protect the cable when the linking arms are folded over.
